**Europäisches Patentamt**

**European Patent Office**

**Office européen des brevets**

(11) Veröffentlichungsnummer : **0 375 971 B1**

## (12) EUROPÄISCHE PATENTSCHRIFT

(45) Veröffentlichungstag der Patentschrift :
**02.11.95 Patentblatt 95/44**

(51) Int. Cl.⁶ : **H04B 7/005**

(21) Anmeldenummer : **89122048.5**

(22) Anmeldetag : **29.11.89**

(54) **Schaltungsanordnung zur Beseitigung von Störungen beim mobilen Funkempfang.**

(30) Priorität : **21.12.88 DE 3843018**

(43) Veröffentlichungstag der Anmeldung :
**04.07.90 Patentblatt 90/27**

(45) Bekanntmachung des Hinweises auf die
Patenterteilung :
**02.11.95 Patentblatt 95/44**

(84) Benannte Vertragsstaaten :
**CH DE FR GB LI SE**

(56) Entgegenhaltungen :
**EP-A- 0 231 487**
**PROCEEDINGS OF THE ICASSP '83 Bd. 1,**
**April 1983, NEW YORK Seiten 49 - 52;SMITH**
**ET AL: 'A New Structure for Adaptive Echo**
**Cancellation'**

(73) Patentinhaber : **Blaupunkt-Werke GmbH**
**Postfach 77 77 77**
**D-31132 Hildesheim (DE)**

(72) Erfinder : **Kässer, Jürgen, Dr.**
**Ahornweg 5**
**D-3201 Diekholzen (DE)**

EP 0 375 971 B1

## Beschreibung

Die Erfindung geht aus von einer Schaltungsanordnung nach der Gattung des Anspruchs 1.

Beim Empfang von Signalen, welche über mehrere Wege von einem Sender zu einem Empfänger gelangen, wobei die Laufzeiten der Signale verschieden groß und insbesondere nicht konstant sind, treten in an sich bekannter Weise Störungen auf. Insbesondere bei mobilen Empfängern, wie beispielsweise Autoradios, können diese Störungen erheblich sein - auch, wenn die sonstigen Empfangsbedingungen, wie beispielsweise die Feldstärke am Empfangsort, einen einwandfreien Empfang zulassen würden.

Durch den Mehrwegeempfang von Signalen, die mit einer im wesentlichen konstanten Amplitude ausgestrahlt werden, insbesondere frequenzmodulierten Signalen, wird außer der Phase bzw. der Frequenz auch die Amplitude der empfangenen Signale beeinflußt. Dieses wird bei dem bekannten Verfahren zur Beseitigung von Störungen durch Mehrwegeempfang bei frequenzmodulierten Signalen nach John R. Treichler (IEEE Transactions on Acoustics, Speech and Signal Processing, Vol. ASSP-31, No. 2, April 1983, Signals , "A new approach to multipath correction of constant modules"), dadurch ausgenutzt, daß das gestörte Signal über ein Filter geleitet wird, dessen Koeffizienten derart gesteuert werden, daß sich am Filterausgang ein Signal mit konstanter Amplitude einstellt. Dieses Filter weist dann eine zur Übertragungsfunktion des Übertragungskanals näherungsweise inverse Funktion auf und korrigiert somit auch die durch den Mehrwegeempfang verursachten Frequenz- und Phasenstörungen.

Weitere Entzerrer in Form von digitalen nichtrekursiven Filtern, in dem die Koeffizienten adaptiv eingestellt werden, sind aus der EP-A-231 487 bekannt. Aus dem Aufsatz in ICASSP 83, Proceedings, Vol. 1, April 83, Seite 49 - 52, "A New Structure for adaptive Echo cancellation", ist ferner bekannt, das als "inversing filter" bei einem "multipath compensator" dienende programmierbare IIR-Filter durch ein adaptives FIR-Filter zu steuern.

Aufgabe der vorliegenden Erfindung ist es, ein Verfahren und eine Schaltungsanordnung zur Beseitigung von Störungen anzugeben bei einem Signal, das mit konstanter Hüllkurve, also mit im wesentlichen konstanter Amplitude, ausgesendet wird und über Wege mit unterschiedlich langen Laufzeiten zum Empfänger gelangt, wobei im Signalweg selbst ein nichtrekursives Filter angeordnet ist, bei welchem keine Instabilitäten wie bei einem rekursiven Filter auftreten können, wobei aber die Berechnung der Koeffizienten derart schnell erfolgt, daß eine ausreichend schnelle Anpassung des nichtrekursiven Filters an die meisten beim mobilen Empfang von frequenzmodulierten Signalen auftretenden Störungen möglich ist.

Diese Aufgabe wird durch die Merkmale des kennzeichnenden Teils des Anspruchs 1 gelöst.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:

Fig. 1      eine schematische Darstellung zur Erläuterung des Mehrwegeempfangs,

Fig. 2      ein Blockschaltbild eines Ausführungsbeispiels,

Fig. 3      ein Blockschaltbild eines nicht-rekursiven Filters, das bei dem Ausführungsbeispiel verwendet wird,

Fig. 4      ein Ausführungsbeispiel für eine Schaltungsanordnung zur Ableitung der Koeffizienten des nichtrekursiven Filters und

Fig. 5      einige Gleichungen zur Erläuterung der bei der erfindungsgemäßen Schaltungsanordnung auftretenden Signale und Übertragungsfunktionen.

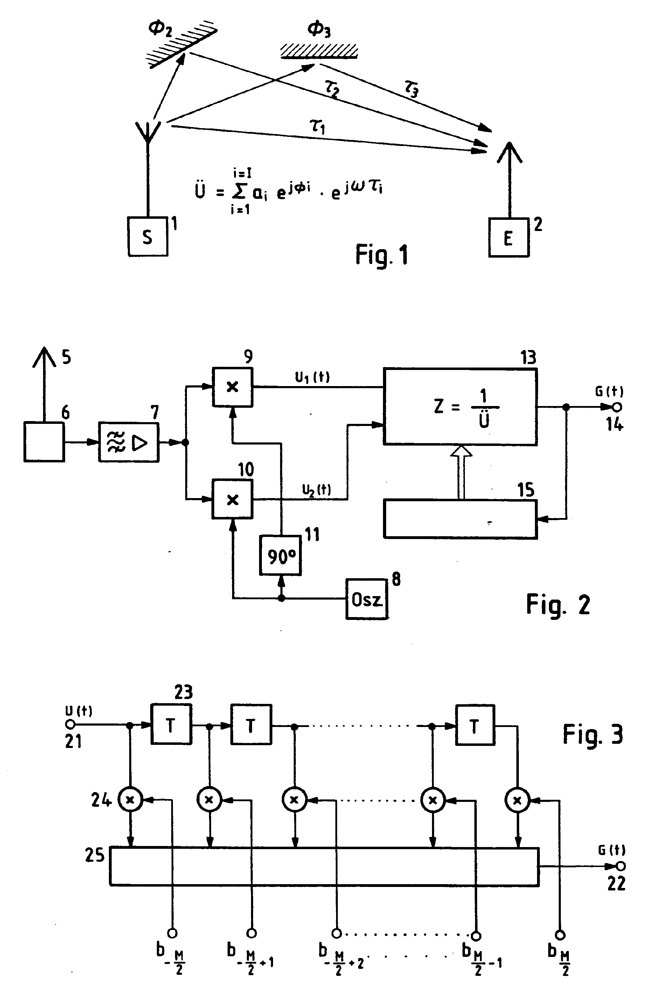

Gleiche Teile sind in den Figuren mit gleichen Bezugszeichen versehen. Außerdem ist die Verarbeitung von komplexen Größen in den Figuren 2 bis 4 nach Komponenten getrennt dargestellt, wenn die jeweilige komplexe Größe als solche verarbeitet, beispielsweise gebildet, addiert oder multipliziert wird.

Fig. 1 stellt verschiedene Wege zwischen einem Sender 1 und einem Empfänger 2 dar. Dabei wird die von der Antenne des Senders 1 abgestrahlte Nachricht einerseits direkt und andererseits über zwei weitere Wege nach jeweils einer Reflektion übertragen. Die Reflektionen können beispielsweise durch Bauten oder Berghänge verursacht sein. Die Übertragungsfunktion Ü ergibt sich aus der Summe der Übertragungsfunktionen aller Wege, wobei $a_i$ der Amplitudenübertragungsfaktor, phi die Phasendrehung der jeweiligen Welle durch die Reflektion, tau die Laufzeit der jeweiligen Welle (bezogen auf eine mittlere Laufzeit), i die Ordnungsnummer des jeweiligen Weges, I die Anzahl der Wege und omega die Frequenz ist.

Bei Frequenzmodulation ist zwar die Amplitude der abgestrahlten Wellen konstant, die Amplitude der empfangenen Signale wird jedoch beim Mehrwegeempfang infolge der modulierten Frequenz veränderlich, da sich die Wellen mit verschieden langen Laufzeiten bei verschiedenen Frequenzen mit entsprechend unterschiedlichen Phasenlagen überlagern. Darüberhinaus ändern sich bei mobilen Empfängern wie beispielsweise Autoradios die Anteile von Ü mit der Zeit, was bei der Auslegung der erfindungsgemäßen Schaltungsanordnung durch eine entsprechend schnelle Regelung zu berücksichtigen ist.

Fig. 2 stellt ein Blockschaltbild mit Teilen einer Empfangseinrichtung dar, welche die erfindungsgemäße Schaltungsanordnung umfaßt. Von einer Antenne 5 werden die empfangenen Signale einer Empfängerschaltung 6 zugeführt, in der in an sich bekannter Weise ein Oszillator, eine Mischstufe und Vorstufen vorgesehen sind. In ebenfalls bekannter Weise wird das Ausgangssignal der Schaltung 6 einem Zwischenfrequenzverstärker 7 zugeführt, der ein geregelter Verstärker ist, jedoch keinen Begrenzer umfaßt. Das Ausgangssignal des Zwischenfrequenzverstärkers 7 wird in das Basisband umgesetzt, wozu es mit der Ausgangsspannung eines Oszillators 8 mit Hilfe von zwei Mischschaltungen 9, 10 gemischt wird. Dabei wird der Mischschaltung 9 die Ausgangsspannung des Oszillators 8 nach einer Phasendrehung um 90° (Schaltung 11) zugeführt, so daß die Ausgangssignale der Mischschaltungen 9, 10 orthogonal sind. Die Ausgangsspannungen der Mischschaltung 10 und der Mischschaltung 9 stellen den Real- und Imaginärteil des mit den Mehrwegeempfangsstörungen behaftete Signal SU(t) dar. Es wird über ein Filter 13 geleitet, welches einen zur Übertragungsfunktion Ü näherungsweise inversen Frequenzgang Z aufweist.

Wie im folgenden genauer beschrieben wird, ist das Filter 13 ein nicht-rekursives Filter mit beispielsweise 256 Koeffizienten, welche derart gesteuert werden, daß die Amplitude des Ausgangssignals des Filters 13 weitgehend konstant ist. Gleichzeitig werden dabei die ebenfalls durch den Mehrwegeempfang bedingten Phasen- bzw. Frequenzfehler beseitigt, was in dem eingangs genannten Aufsatz ausführlich erläutert ist. Im Gegensatz zu dem bekannten Verfahren, bei welchem sämtliche Koeffizienten des nicht-rekursiven Filters als Variationsparameter direkt durch ein Optimierungsverfahren auf konstante Amplitude gewonnen werden, ist bei der erfindungsgemäßen Schaltungsanordnung für das Filter 13 eine Regelschaltung 15 vorgesehen, in welcher relativ wenige Koeffizienten eines rekursiven Filters adaptiert und aus diesen die relativ große Anzahl von Koeffizienten für das nicht-rekursive Filter 13 ermittelt werden.

Der Aufwand für die Bestimmung der Filterkoeffizienten eines nicht-rekursiven Filters 13 mit 256 Koeffizienten kann durch Verwendung von ungefähr 10 Koeffizienten innerhalb der Regelschaltung 15 drastisch reduziert werden. Vom Ausgang 14 der in Fig. 2 dargestellten Empfangsschaltung kann das von Störungen befreite Signal G(t) abgenommen und einem Demodulator zugeführt werden.

Zweckmäßigerweise sind das nicht-rekursive Filter 13 und die Regelschaltung 15 in digitaler Technik ausgeführt, was eine Zuführung des Signals U(t) in digitaler Form voraussetzt. Eine zweckmäßige Analog/Digital-Wandlung ist an sich bekannt und braucht im Zusammenhang mit der vorliegenden Erfindung nicht näher erläutert zu werden. In den im folgenden beschriebenen Schaltungen bedeutet jeweils T eine Periode eines Taktes, mit dem Abtastwerte der empfangenen Signale der Signalverarbeitung zugeführt werden. Die Periode stimmt vorzugsweise mit der Abtastperiode bei der Analog/Digital-Wandlung überein und beträgt bei dem bevorzugten Ausführungsbeispiel 2,5 $\mu$s.

Fig. 3 zeigt ein an sich bekanntes nicht-rekursives Filter mit M Koeffizienten. Dem Filtereingang 21 wird das zu filternde Signal U(t) zugeführt und (M-1) mal um jeweils eine Abtastperiode T verzögert. Jedes der entstehenden Signale wird mit einem Filterkoeffizienten $b_l$ multipliziert. Die Ergebnisse der Multiplikationen werden addiert und einem Ausgang 22 zugeführt. Derartige digitale Filter können entweder mit Hilfe von Verzögerungsschaltungen 23, Multiplizierschaltungen 24 und einer Addierschaltung 25 realisiert werden. Eine häufig angewandte Möglichkeit ist jedoch die Verwendung eines entsprechend programmierten digitalen Signalprozessors.

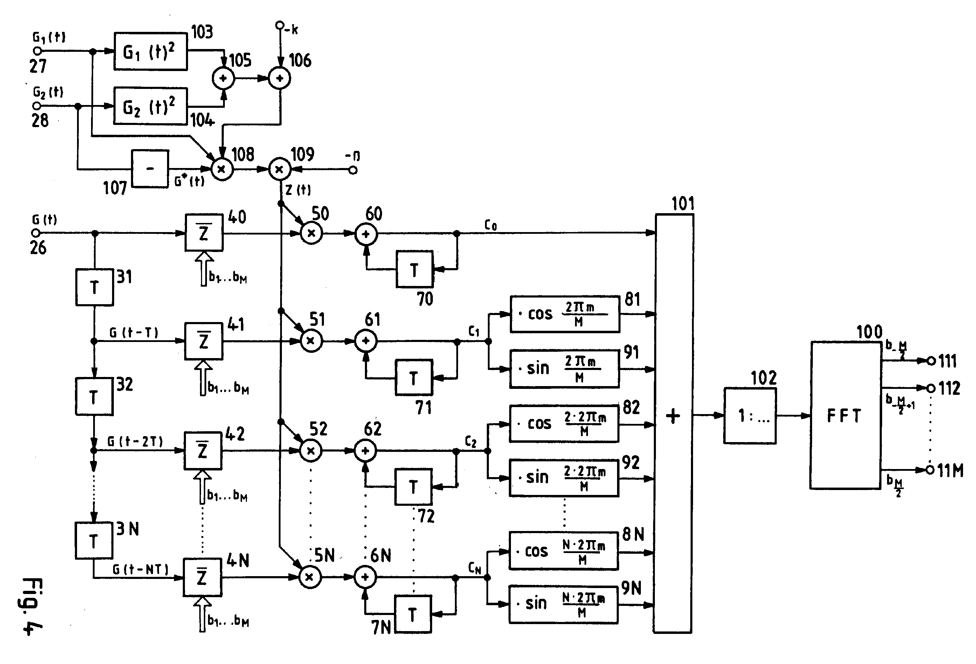

Fig. 4 zeigt ein erstes Ausführungsbeispiel für eine Regelschaltung 15, welcher bei 26 das von Störungen befreite Signal G(t) und bei 27 und 28 der Realteil $G_1(t)$ und der Imaginärteil $G_2(t)$ des Signals G(t) getrennt voneinander zugeführt werden. Ausgängen 111 bis 11M sind die Koeffizienten $b_1$ bis $b_M$ für das Filter 13 entnehmbar. Mit Hilfe der in Fig. 4 dargestellten Schaltungsanordnung werden zunächst Koeffizienten $c_0$ bis $c_N$ eines entsprechenden rekursiven Filters abgeleitet, dabei liegt auf dem bevorzugten Anwendungsgebiet der Erfindung N in der Größenordnung 10. Je größer die zu heilenden Umwege sind, desto größer ist N zu wählen. Dabei gilt $N \approx tau_{max}/T$, wobei $tau_{max}$ die maximale Laufzeitdifferenz ist. Danach werden aus den Koeffizienten $c_0$ bis $c_N$ M Stützstellen für die anschließende schnelle Fouriertransformation errechnet.

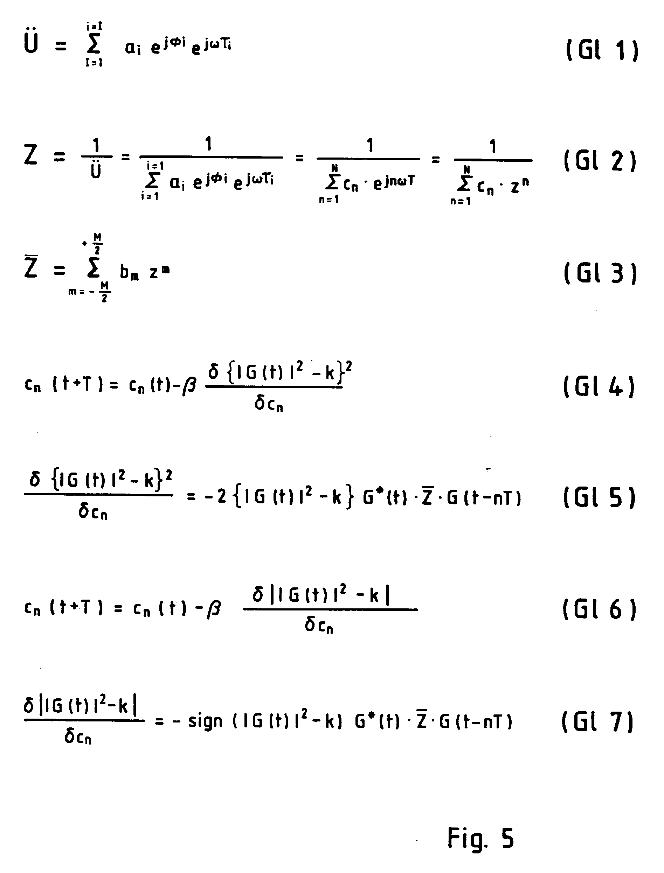

In Fig. 5 sind einige Gleichungen zusammengestellt, welche die Funktionen der Baugruppen des Ausführungsbeispiels nach Fig. 4 beschreiben. Gl1 stellt die Übertragungsfunktion beim Mehrwegeempfang dar. Gl2 ist die Charakteristik des Filters 13, wie sie sich aus der Überlegung ergibt, daß durch das Filter 13 die Übertragungsfunktion Ü kompensiert werden soll. Gl2 weist jedoch die für ein rekursives Filter typische Form auf. Gl3 stellt einen Ansatz für die Charakteristik eines nicht-rekursiven Filters dar, dessen Koeffizienten $b_1$ bis $b_M$ derart zu steuern sind, daß $\overline{Z} = Z$ wird.

Zur Ermittlung der Koeffizienten $c_0$ bis $c_N$ wird bei dem Ausführungsbeispiel von einem stochastischen Gradientenverfahren ausgegangen, wobei kein Erwartungswert über die Zielfunktion gebildet wird, sondern der Momentanwert der Zielfunktion nach $c_n$ abgeleitet wird. Die dabei erforderliche Mittelwertbildung erfolgt dadurch, daß jeder neue Abtastwert für einen weiteren Iterationsschritt genutzt wird. Dieses führt zu Gl4, wobei $c_n(T+t)$ der jeweils zu berechnende Koeffizient, $c_n(t)$ der vorangegangene Koeffizient, ß eine vorgebbare

3

EP 0 375 971 B1

Schrittweite und k eine Konstante ist, die durch einen vorgeschalteten Regelverstärker und den Aussteuerbereich des Analog/Digital-Wandlers gegeben ist. Die Ableitung der Zielfunktion nach dem Koeffizienten $c_n$ ergibt sich aus Gl5. Dabei ist $G*(t)$ die konjugiert komplexe Größe von $G(t)$.

Bei der Schaltungsanordnung nach Fig. 4 werden zur Ableitung der Zielfunktion gemäß Gl5 der Realteil $G_1(t)$ und der Imaginärteil $G_2(t)$ bei 103 und 104 quadriert. Die Quadratsumme wird von einem Addierer 105 gebildet, an den sich ein weiterer Addierer 106 anschließt, von dem die Konstante -k addiert wird. Zur Bildung von $G*(t)$ wird der Imaginärteil $G_2(t)$ bei 107 negiert. Der negierte Imaginärteil und der Realteil $G_1(t)$ werden zusammen mit dem Ausgangssignal des Addierers 106 einem Multiplizierer 108 zugeführt, dessen Ausgangssignal in einem weiteren Multiplizierer mit -ß multipliziert wird.

Das Ergebnis $\overline{Z}(t)$ wird dann mit den gefilterten Signalen $\overline{Z}(t) \cdot G(t-nT)$ mit Hilfe der Multiplizierer 50 bis 5N multipliziert. Die Signale $G(t-nT)$ werden von dem bei 30 zugeführten Signal $G(t)$ mit Hilfe der Verzögerungsglieder 31 bis 3N abgeleitet. Die Filter 40 bis 4N entsprechen dem Filter 13 (Fig. 2) mit der Charakteristik $\overline{Z}$.

Die Koeffizienten $c_n(T+1)$ werden dann aus dem jeweils vorangegangen Koeffizienten $c_n$ und der Ausgangsgröße der Multiplizierer 50 bis 5N abgeleitet. Dazu dient jeweils ein Addierer 60 bis 6N und ein Verzögerungsglied 70 bis 7N von der Dauer einer Abtastperiode T.

Zur Gewinnung der Stützwerte für die schnelle Fouriertransformation (FFT) 100 werden die Koeffizienten $c_1$ bis $c_N$ bei 81 bis 8N mit einer Cosinusfunktion und bei 91 bis 9N mit einer Sinusfunktion multipliziert. Dabei werden jeweils für eine Periode der Cosinus- bzw. Sinusfunktion M Stützwerte berechnet. Jeweils ein Stützwert entsteht aus der Summe über alle n für jeweils einen Wert von m. Die Summe wird in einer Addierschaltung 101 gebildet. Vor der Zuführung zur FFT 100 wird bei 102 der Kehrwert der Summe gebildet.

## Patentansprüche

1.  Verfahren zur Minderung von Störungen beim mehrfachen Empfang von Signalen infolge unterschiedlicher Laufzeiten, welche mit im wesentlichen konstanter Hüllkurve ausgesendet worden sind, wobei die empfangenen Signale ein nichtrekursives Filter mit laufend berechneten Koeffizienten durchlaufen,
    dadurch gekennzeichnet,
    daß die Koeffizienten des nichtrekursiven Filters aus Koeffizienten eines rekursiven Filters berechnet werden, dessen Ordnung in der Größenordnung von $N = \dfrac{tau_{max}}{T}$ liegt, wobei $tau_{max}$ gleich der maximalen Laufzeitdifferenz und T die Abtastperiode ist.

2.  Verfahren nach Anspruch 1,
    dadurch gekennzeichnet,
    daß das empfangene Signal vor der Zuführung zum nichtrekursiven Filter in das Basisband gemischt wird.

3.  Verfahren nach Anspruch 1,
    dadurch gekennzeichnet,
    daß das Signal als digitales Signal dem nichtrekursiven Filter zugeführt wird, daß das Ausgangssignal des nichtrekursiven Filters mehrmals um einen vorgegebenen Zeitabschnitt verzögert wird, daß die verzögerten Ausgangssignale des nichtrekursiven Filters je einem weiteren nichtrekursiven Filter zugeführt werden, daß die Ausgangssignale der weiteren nichtrekursiven Filter jeweils mit einer eine Amplitudenmodulation des Ausgangssignals des von den empfangenen Signalen durchlaufenen nichtrekursiven Filters kennzeichnenden Größe multipliziert werden und daß die Ergebnisse der Multiplikation zur Bildung jeweils eines Koeffizienten eines rekursiven Filters akkumuliert werden.

4.  Verfahren nach Anspruch 3,
    dadurch gekennzeichnet,
    daß die vom Rechenwerk errechneten Koeffizienten des rekursiven Filters jeweils mit einer Sinus- und einer Cosinusfunktion multipliziert werden und daß die Summe der Ergebnisse der Multiplikationen für alle Koeffizienten des rekursiven Filters summiert werden und daß die Summe jeweils für einen Wert der Argumente der Sinus- und Cosinusfunktion einen Stützwert für eine anschließende schnelle Fouriertransformation bildet, deren Ausgangsgrößen die Koeffizienten des nichtrekursiven Filters bilden.

5.  Schaltungsanordnung zur Durchführung des Verfahrens nach Anspruch 1 oder 2,
    dadurch gekennzeichnet,

4

daß das nichtrekursive Filter und eine Schaltung zur Berechnung der Koeffizienten des nichtrekursiven Filters einen Regelkreis bilden, wobei durch ein Iterationsverfahren die Koeffizienten im Sinne einer Minimierung einer Amplitudendemodulation des Ausgangssignals des nichtrekursiven Filters berechnet werden.

6. Schaltungsanordnung nach Anspruch 5,
dadurch gekennzeichnet,
daß das nichtrekursive Filter einige 100 Koeffizienten aufweist und daß etwa 10 Koeffizienten eines rekursiven Filters vorgesehen sind.

7. Schaltungsanordnung nach Anspruch 5,
dadurch gekennzeichnet,
daß der vorgegebene Zeitabschnitt etwa 2,5 $\mu$s beträgt.

## Claims

1. Method for reducing interference in the case of multiple reception of signals resulting from different propagation times, which signals have been transmitted with an essentially constant envelope curve, the received signals passing through a non-recursive filter having continuously calculated coefficients, characterized in that the coefficients of the non-recursive filter are calculated from coefficients of a recursive filter whose order is in the order of magnitude of $N = \dfrac{^{tan}max}{T}$, $^{tan}max$ being the maximum propagation-time difference and T being the sampling period.

2. Method according to Claim 1, characterized in that the received signal is mixed into the base band before being fed to the non-recursive filter.

3. Method according to Claim 1, characterized in that the signal is fed as a digital signal to the non-recursive filter, in that the output signal of the non-recursive filter is delayed a plurality of times by a predetermined time interval, in that the delayed output signals of the non-recursive filter are fed to in each case one further non-recursive filter, in that the output signals of the further non-recursive filter are in each case multiplied by a variable which characterizes amplitude modulation of the output signal of the non-recursive filter through which the received signals pass, and in that the results of the multiplication are accumulated to form in each case one coefficient of a recursive filter.

4. Method according to Claim 3, characterized in that those coefficients of the recursive filter which are calculated by the arithmetic and logic unit are in each case multiplied by a sine function and a cosine function and in that the sum of the results of the multiplications for all the coefficients of the recursive filter are summed, and in that the sum for in each case one value of the arguments of the sine function and cosine function forms a support value for a subsequent fast Fourier transformation whose output variables form the coefficients of the non-recursive filter.

5. Circuit arrangement for carrying out the method according to Claim 1 or 2, characterized in that the non-recursive filter and a circuit for calculating the coefficients of the non-recursive filter form a control loop, the coefficients being calculated by means of an iteration method, in the sense of minimizing amplitude demodulation of the output signal of the non-recursive filter.

6. Circuit arrangement according to Claim 5, characterized in that the non-recursive filter has several hundred coefficients and in that approximately 10 coefficients of a recursive filter are provided.

7. Circuit arrangement according to Claim 5, characterized in that the predetermined time interval is approximately 2.5 $\mu$s.

## Revendications

1. Procédé pour réduire au minimum les perturbations dans le cas d'une réception multiple de signaux à cause de temps de parcours différents, signaux qui sont émis avec une courbe enveloppe essentiellement constante, les signaux reçus traversant un filtre non récurrent dont les coefficients sont calculés de manière continue, caractérisé en ce que les coefficients du filtre non récurrent sont calculés à partir des coefficients d'un filtre récurrent dont l'ordre de grandeur se situe aux environs de $N = \dfrac{\tau_{max}}{T}$, $\tau_{max}$ étant égal à la différence de temps de parcours maximale et T étant la période de détection.

2. Procédé selon la revendication 1, caractérisé en ce que le signal reçu est mélangé dans la bande de base avant d'être appliqué au filtre non récurrent.

3. Procédé selon la revendication 1, caractérisé en ce que le signal est appliqué comme signal numérique au filtre non récurrent, le signal de sortie du filtre non récurrent est retardé plusieurs fois d'une durée prédéterminée, les signaux de sortie retardés du filtre non récurrent sont appliqués chaque fois à un autre filtre non récurrent et les signaux de sortie de l'autre filtre non récurrent sont multipliés chaque fois par une grandeur caractérisant la modulation d'amplitude du signal de sortie du filtre non récurrent traversé par les signaux reçus, et le produit de la multiplication est accumulé chaque fois pour donner un coefficient d'un filtre récurrent.

4. Procédé selon la revendication 3, caractérisé en ce que les coefficients calculés par le moyen de calcul du filtre récurrent sont multipliés respectivement par une fonction sinus et une fonction cosinus et les sommes des produits sont additionnées, pour tous les coefficients du filtre récurrent, la somme formant chaque fois, pour une valeur des arguments des fonctions sinus et cosinus, une valeur d'appui pour la transformation de Fourier rapide, consécutive, dont les grandeurs de sortie constituent les coefficients du filtre non récurrent.

5. Circuit pour la mise en oeuvre du procédé selon la revendication 1 ou 2, caractérisé en ce que le filtre non récurrent et un circuit de calcul des coefficients du filtre non récurrent, forment un circuit de régulation, et en ce que par un procédé d'itération, on calcule les coefficients dans le sens d'une réduction minimum d'une démodulation d'amplitude du signal de sortie du filtre non récurrent.

6. Circuit selon la revendication 5, caractérisé en ce que le filtre non récurrent présente quelque 100 coefficients, et en ce qu'on prévoit environ 10 coefficients d'un filtre récurrent.

7. Circuit selon la revendication 5, caractérisé en ce que le segment de temps prédéterminé est de l'ordre de 2,5 μs.

$$\ddot{U} = \sum_{i=1}^{i=I} a_i \; e^{j\phi i} \cdot e^{j\omega \tau_i}$$

Fig. 1

$$Z = \frac{1}{\ddot{U}}$$

Fig. 2

Fig. 3

7

Fig. 4

$$\ddot{U} = \sum_{i=1}^{i=I} a_i \, e^{j\phi_i} \, e^{j\omega T_i} \qquad (Gl\ 1)$$

$$Z = \frac{1}{\ddot{U}} = \frac{1}{\sum\limits_{i=1}^{i=1} a_i \, e^{j\phi_i} \, e^{j\omega T_i}} = \frac{1}{\sum\limits_{n=1}^{N} c_n \cdot e^{jn\omega T}} = \frac{1}{\sum\limits_{n=1}^{N} c_n \cdot z^n} \qquad (Gl\ 2)$$

$$\overline{Z} = \sum_{m=-\frac{M}{2}}^{+\frac{M}{2}} b_m \, z^m \qquad (Gl\ 3)$$

$$c_n(t+T) = c_n(t) - \beta \, \frac{\delta \left\{ |G(t)|^2 - k \right\}^2}{\delta c_n} \qquad (Gl\ 4)$$

$$\frac{\delta \left\{ |G(t)|^2 - k \right\}^2}{\delta c_n} = -2 \left\{ |G(t)|^2 - k \right\} G^*(t) \cdot \overline{Z} \cdot G(t-nT) \qquad (Gl\ 5)$$

$$c_n(t+T) = c_n(t) - \beta \, \frac{\delta \, | \, |G(t)|^2 - k \, |}{\delta c_n} \qquad (Gl\ 6)$$

$$\frac{\delta \, | \, |G(t)|^2 - k \, |}{\delta c_n} = - \, \text{sign} \, (|G(t)|^2 - k) \, G^*(t) \cdot \overline{Z} \cdot G(t-nT) \qquad (Gl\ 7)$$

Fig. 5